# EUROPEAN PATENT APPLICATION

(11) **EP 1 079 338 A2**
(43) Date of publication of application: **28.02.2001**
(21) Application number: 00114779.2
(22) Date of filing: 10.07.2000
(51) Int. Cl.: G07F 7/10

(54) **Method of controlling information written into storage media**

(30) Priority: 27.08.1999 JP 24190699
(71) Applicant: Hitachi, Ltd., Chiyoda-ku, Tokyo 101-8010 (JP)
(72) Inventor: Takaragi, Kazuo, Hitachi, Ltd., Tokyo 100-8220 (JP); Okamoto, Chikashi, Hitachi, Ltd., Tokyo 100-8220 (JP)
(74) Representative: Strehl Schübel-Hopf & Partner

(57) **Abstract**

A method is adopted in a control apparatus (30) for controlling ID information stored in a storage medium (10) in conjunction with a terminal (20) reading out the ID information from the storage medium and used to catalogue information for the storage medium into a memory employed in the control apparatus whereby: in an operation to catalogue information into the memory of the control apparatus, the terminal (20) receives the information, reads out the ID information from the storage medium (10) and transmits the information and the ID information to the control apparatus (30); and the control apparatus (30) catalogues the information and the ID information in the memory by associating the information with the ID information, whereas in an operation to examine information already catalogued in the memory employed in the control apparatus, the terminal (20) reads out the ID information from the storage medium (10) and transmits the ID information to the control apparatus (30); and the control apparatus (30) transmits the information already catalogued in the memory and associated with the ID information to the terminal (20) for displaying the information).

## Description

### BACKGROUND OF THE INVENTION

The present invention relates to a system using storage media such as an IC card having an electronic circuit chip mounted thereon and a magnetic recording card.

With the progress in miniaturization and thickness reduction of an electronic circuit chip such as an integrated circuit chip, a variety of ways to utilize an electronic circuit chip have been proposed. In Japanese Patent Laid-open No. Hei 3-38396, there has been proposed a way of utilizing an electronic circuit chip for storing information by mounting the chip on a card along with an antenna device for allowing the information to be read out from the chip by adoption of a non-contact reading technique. By storing information on the owner of such a card in an electronic circuit chip mounted on the card, the card can be used as an ID card of the card holder. In addition, by storing information on a commodity, to which such a card is attached, in an electronic circuit chip mounted on the card, the card can be used as a tag of the commodity.

The amount of information that can be stored in an electronic circuit chip mounted on a card is a trade-off parameter with the size of the card. To put it in detail, the larger the amount of information stored in an electronic circuit chip mounted on a card, the larger the size of the card. A card with a large size is less portable. Taking the portability of a card into consideration, it is necessary to reduce the size of the card. However, a card with a small size allows only a chip with a small, size to be mounted thereon and a chip with a small size is capable of storing information of only a small amount. These relations hold true of not only a card using an electronic circuit chip, but also other storage media such as a magnetic recording card.

In order to allow information to be cataloged onto a card having an electronic circuit chip mounted thereon, a RAM (Random-Access Memory) must be included in the electronic circuit chip. In general, a RAM is large in size and expensive in comparison with a ROM (Read-Only Memory). Thus, a card having an electronic circuit chip including a RAM for cataloging information is large in size and thus not portable. In addition, such a card is expensive.

### SUMMARY OF THE INVENTION

It is thus an object of the present invention addressing the problem described above to provide a storage medium such as a card with an electronic circuit chip mounted thereon or a magnetic recording card, as if the storage medium were a medium allowing information of an amount exceeding the storage capacity of the storage medium to be cataloged therein, or to provide a read-only storage medium, as if the read-only storage medium were a medium that allows information to be cataloged therein.

In order to achieve the object described above, the present invention provides a method of controlling information to be written for a storage medium used for storing ID information, a control apparatus for controlling the ID information stored in the storage medium and a terminal for reading out the information from the storage medium and displaying information received from the control apparatus, whereby: in an operation to catalog information for the storage medium into the control apparatus, the terminal reads out the ID information from the storage medium and transmits the ID information and the information to be cataloged for the storage medium to the control apparatus which then catalogs the ID information and the information to be cataloged for the storage medium in the control apparatus with the latter associated with the former; and in an operation to examine information already cataloged in the control apparatus for the storage medium, the terminal reads out the ID information from the storage medium and transmits the ID information to the control apparatus in order to acquire the information already cataloged in the control apparatus for the storage medium whereas the control apparatus transmits the information already cataloged for the storage medium being associated with the ID information to the terminal.

The storage medium typically comprises an electronic circuit chip in which ID information is stored in advance and an antenna for generating power by utilizing a received electric wave. The antenna also allows information to be read out from the electronic circuit chip and is used for transmitting the information. The electronic circuit chip and the antenna are mounted on a sheet made of typically paper or plastic. In this case, the terminal has a function of generating an electric wave and reading out ID information from the storage medium by adoption of a non-contact technique. It is preferable to adopt cryptocommunication where the ID information read out from the storage medium is transmitted to the control apparatus by using an electric wave or a public network.

In an operation to catalog information for the storage medium in the control apparatus, the terminal reads out ID information from the storage medium, transmitting the ID information to the control apparatus along with the information to be cataloged for the storage medium. The control apparatus then catalogs the information received from the terminal into a memory in the control apparatus for the storage medium by associating the information with the ID information.

In the control apparatus, since information to be cataloged for the storage medium is controlled in the control apparatus by being actually stored in a memory in the control apparatus and associated with ID information, the information to be cataloged for the storage medium can be handled as if it were possible to store the information into the storage medium even if the amount of the information is greater than the storage capacity of the storage medium, or even if the storage medium is a read-only medium.

In addition to ID information, the storage medium can also be used for storing authentication information of the ID information, that can be authenticated by the control apparatus with use of a key stored therein, in advance. Thus, it is possible to check whether or not ID information stored in the storage medium has been altered by using the authentication information stored in the storage medium along with the ID information and a key owned by the control apparatus. As a result, information security can be enhanced.

If attribute information is stored in the storage medium in advance along with ID information, the control apparatus can also be used for controlling ID information and information stored in the storage medium by associating them with the attribute information stored in the storage medium.

The terminal can be used for locally controlling some pieces of ID information and some pieces of cataloged information which are controlled by the control apparatus and associated with at least a piece of attribute information. In order for the terminal to examine information cataloged in the control apparatus for the storage medium in this case, the terminal reads out ID information and attribute information associated with the cataloged information from the storage medium, checking whether or not the ID information associated with the attribute information is one of the pieces of ID information controlled by the terminal itself.

If the ID information associated with the attribute information is one of the pieces of ID information controlled by the terminal itself, the terminal immediately searches the pieces of ID information controlled by itself for the ID information read out from the storage medium and is thus capable of carrying out processing using a particular piece of cataloged information associated with the ID information. Thus, since it is no longer necessary to make an access to the control apparatus, the operation to search the pieces of cataloged information for the particular piece of cataloged information can be carried out locally in the terminal, thus high-speed processing can be performed. If the ID information associated with the attribute information is not one of the pieces of ID information controlled by the terminal itself, on the other hand, a piece of cataloged information and a piece of ID information associated with the attribute information read out from the storage medium shall be acquired from the control apparatus. Then, after the pieces of cataloged information and the pieces of ID information controlled by the terminal itself have been updated by using the piece of cataloged information and the piece of ID information acquired from the control apparatus, the terminal searches the pieces of ID information controlled by itself for the ID information read out from the storage medium and carries out processing using cataloged information associated with the ID information found in the search.

The control apparatus can also be used for controlling ID information of the storage medium by associating the ID information with user ID information that can be set by the user of the storage medium. In this case, in order to examine information cataloged in the control apparatus for the storage medium, the terminal reads out ID information of the storage medium and transmits the ID information to the control apparatus. The control apparatus transmits cataloged information associated with the ID information received from the terminal and the user ID information.

In this scheme, since the user of the storage medium is allowed to provide user ID information serving as control information unique to the user itself to the storage medium, the user is capable of controlling the storage medium with a high degree if efficiency.

### BRIEF DESCRIPTION OF THE DRAWINGS

The present invention will be more apparent from the following detailed description when taken in conjunction with the accompanying drawings, in which:
Fig. 1 is a diagram showing the configuration of a control system implemented by a first embodiment of the present invention in a plain and simple manner;
Figs. 2A and 2B are diagrams showing a configuration of an IC card 10 in a simple and plain manner;
Figs. 3A and 3B are explanatory diagrams showing information stored in a memory cell 125 of an electronic circuit chip 12;
Fig. 4 is a block diagram showing the functional configuration of a portable apparatus 20 in a simple and plain manner;
Fig. 5 is a block diagram showing a typical hardware configuration of the portable apparatus 20;
Fig. 6 is a block diagram showing the functional configuration of a control apparatus 30 in a simple and plain manner;
Figs. 7A and 7B are explanatory diagrams showing data stored in an ID data base 31 of the control apparatus 30;
Fig. 8 is a block diagram showing a typical hardware configuration of the control apparatus 30;
Fig. 9 is a diagram showing a sequence of operations carried out by the control system implemented by the embodiment to examine information cataloged in the ID data base 31 of the control apparatus 30 for the information on the IC card 10 as initiated by a command entered by the user of the portable apparatus 20;
Fig. 10 is a diagram showing a sequence of operations carried out by the control system implemented by the embodiment to catalog new information to be cataloged in the ID data base 31 of the control apparatus 30 for the information on IC card 10 as initiated by a command entered by the user of the portable apparatus 20;
Fig. 11 is a block diagram showing the configuration of a portable apparatus 60 provided by another embodiment of the present invention in a simple and plain manner;
Fig. 12 is a block diagram showing the configuration of a control apparatus 70 provided by the other embodiment in a simple and plain manner;
Fig. 13 is an explanatory diagram showing data stored in an ID data base 71 of the control apparatus 70;
Fig. 14 is a diagram showing a sequence of operations carried out by the control system implemented by the other embodiment to examine information cataloged in the ID data base 71 of the control apparatus 70 for the information on the IC card 10 as initiated by a command entered by the user of the portable apparatus 60; and
Fig. 15 is a diagram showing a sequence of operations carried out by the user of the portable apparatus 60 to write information to be cataloged in the ID data base 71 of the control apparatus 70 for the IC card 10 in the other embodiment as initiated by a command entered by the user of the portable apparatus 60.

### DETAILED DESCRIPTION OF THE PREFERRED EMBODIMENTS

Some preferred embodiments of the present invention are described as follows.

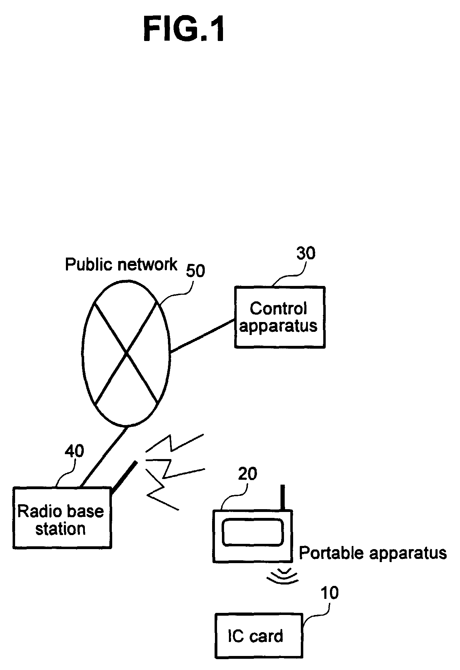

Fig. 1 is a diagram showing the configuration of a control system implemented by a first embodiment of the present invention in a plain and simple manner. As shown in the figure, a control apparatus 30 and a portable apparatus 20 are connected to each other by a radio base station 40 and a public network 50 of a mobile communication system for mobile telephones and PHSes.

The control apparatus 30 controls information stored therein for an IC card 10 by associating the information with an ID number stored in the IC card 10. The portable apparatus 20 has a function to read out information stored in the IC card 10 by adoption of a non-contact technique and a function of a mobile communication device such as a mobile telephone or a PHS. The mobile telephone 20 is thus capable of reading out information stored in the IC card 10 and transmitting the information to the control apparatus 30 as well as carrying out processing using cataloged information received from the control apparatus 30.

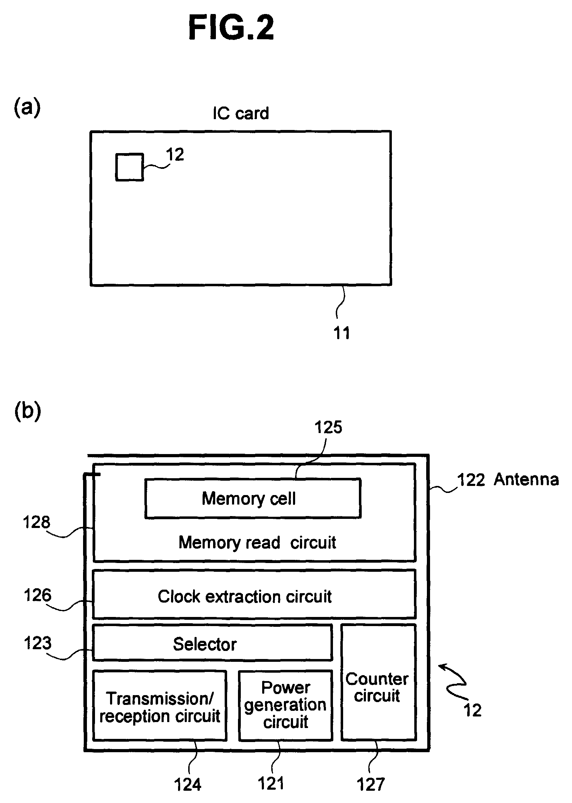

Figs. 2A and 2B are diagrams showing a configuration of the IC card 10 in a simple and plain manner. As shown in Fig. 2A, the IC card 10 includes an electronic circuit chip 12 mounted on a sheet 11 made of paper or plastic or an electronic circuit chip 12 sandwiched between 2 sheets 11. In either case, the electronic circuit chip 12 has a function to store information therein and a function to generate power by using a received electric wave as well as to read out information stored therein and transmit the information.

Fig. 2B is a block diagram showing components composing the electronic circuit chip 12. A power generation circuit 121 utilizes an electric wave received from an antenna 122 to generate power for supplying it to the other components of the electronic circuit chip 12. A selector 123 changes the transmission/reception state of a transmission/reception circuit 124. Normally, the transmission/reception circuit 124 is set in a reception state, but when information is read out from memory cell 125, the transmission/reception circuit 124 is turned into a transmission state. A clock extraction circuit 126 and a counter circuit 127 generate a clock signal for reading out information from a memory cell 125 by utilizing an electronic wave received through the antenna 122 and the transmission/reception circuit 124. A memory read circuit 128 reads out information from the memory cell 125 in accordance with the clock signal generated by the clock extraction circuit 126 and transmits the information through the transmission/reception circuit 124 and the antenna 122.

The electronic circuit chip 12 is typically a small chip with the memory cell 125 having a square area of 0.3 mm × 0.3 mm and a thickness of 10 µm or smaller and the memory read circuit 128 implemented by a ROM with a storage capacity of 128 bits.

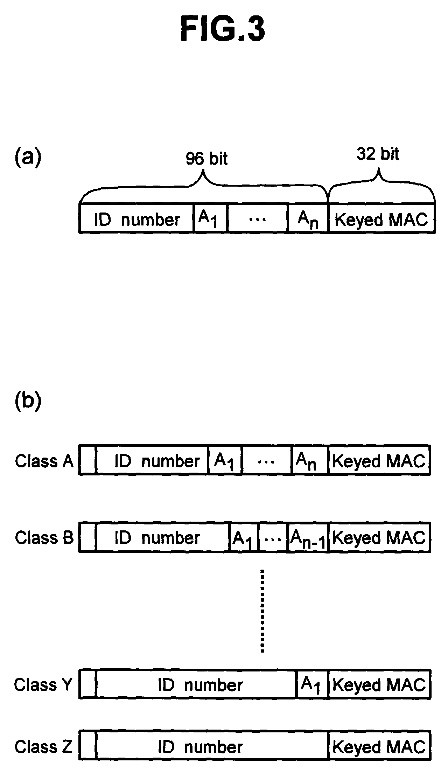

Figs. 3A and 3B are explanatory diagrams showing information stored in the memory cell 125 of an electronic circuit chip 12. As shown in Fig. 3A, the memory cell 125 is used by the user of the electronic circuit chip 12 to store an ID number, at least one of a set of attribute numbers A1 to An where 1 ≦ n and a keyed MAC (Message Authentication Code) in advance.

Used for identifying the electronic circuit chip 12, the ID number is a unique number assigned to each one of the electronic circuit chip 12.

The set of attribute numbers A1 to An are used to classify an IC card 10 on which the electronic circuit chip 12 is mounted. The set of attribute numbers A1 to An are unique numbers assigned to identify attributes of the IC card 10, such as the utilization and the purchaser of the IC card 10. Examples of the utilization of the IC card 10 are a certificate as an identification of an individual controlled by the purchaser of the IC card 10, or as a tag of a commodity traded by the purchaser of the IC card 10.

The keyed MAC is a code obtained as a result of coding the ID number and the set of attribute numbers A1 to An or their hash values by using a private key owned by the provider of the electronic circuit chip 12. This code is used for detecting alteration of the ID number and the set of attribute numbers A1 to An stored in the memory cell 125.

In an example shown in Fig. 3A, the ID number and the set of attribute numbers A1 to An occupy 96 bits of the 128 bits of the information. The remaining 32 bits are allocated to the keyed MAC. In this way, a 96-bit number unique to each one of the electronic circuit chip 12 can be assigned to the electronic circuit chip 12. There are 2⁹⁶ unique numbers that can be formed with 96 bits and these unique numbers are plentiful enough to be assigned to different electronic circuit chips 12.

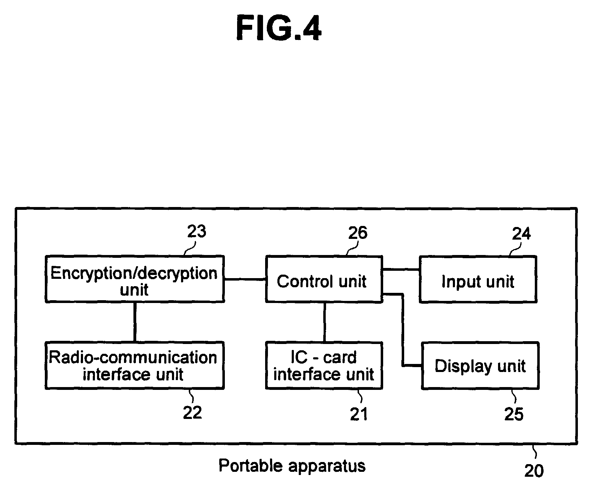

Fig. 4 is a block diagram showing the functional configuration of the portable apparatus 20 in a simple and plain manner. As shown in the figure, the portable apparatus 20 comprises an IC-card interface unit 21, a radio-communication interface unit 22, an encryption/decryption unit 23, an input unit 24, a display unit 25 and a control unit 26.

The IC-card interface unit 21 generates an electric wave for driving the IC card 10 to generate power, and receives information transmitted by the IC card 10. In this way, information can be read out from the IC card 10 by adoption of the non-contact technique.

The radio-communication interface 22 allows the portable apparatus 20 to function as a mobile telephone or a PHS to communicate with the control apparatus 30 through the radio base station 40 and the public network 50.

The encryption/decryption unit 23 encrypts information to be transmitted to the control apparatus 30 by using a common key kept secret between the portable apparatus 20 and the control apparatus 30, or by using a public key forming a pair in conjunction with a private key kept confidential by the control apparatus 30. In addition, the encryption/decryption unit 23 decrypts encrypted information received from the control apparatus 30 by using the common key kept secret between the portable apparatus 20 and the control apparatus 30, or by using a private key kept confidential by the portable apparatus 20 itself. In this way, cryptocommunications can be carried out between the portable apparatus 20 and the control apparatus 30.

The input unit 24 receives a command to catalog information into the control apparatus 30 for the IC card 10 or a display command entered by the user. The input unit 24 also receives information to be written into the IC card 10.

The display unit 25 displays information received by the input unit 24 to be cataloged for the IC card 10 or encrypted information received from the control apparatus 30 and decrypted by the encryption/decryption unit 23.

The control unit 26 controls the other components of the potable apparatus 20 to display information to be cataloged for the IC card 10 on the display unit 25 and to transmit the information to be cataloged into the ID data base 31 of the control apparatus 30.

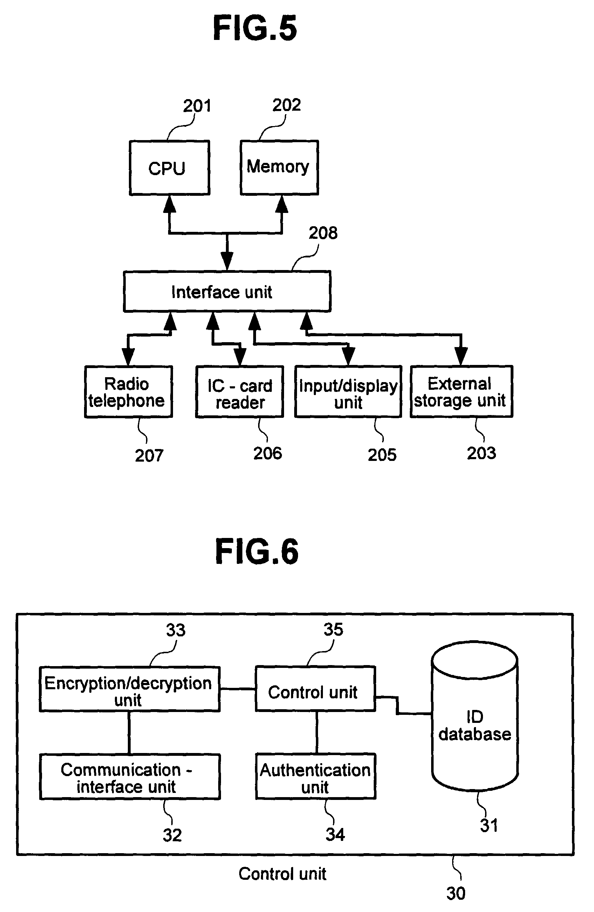

Fig. 5 is a diagram showing a typical hardware configuration of the portable apparatus 20. As shown in the figure, the portable apparatus 20 comprises a CPU (Central Processing Unit) 201, a memory 202, an external storage unit 203, an input/display unit 205, an IC-card reader 206, a radio telephone 207 and an interface unit 208. The external storage unit 203 has a hard disc and a portable storage medium such as a CD-ROM (Compact Disc-Read Only Memory) or an FD (Floppy Disc). The input/display unit 205 is implemented by a liquid-crystal display device having a touch sensor. The IC-card reader 206 reads out information from an IC card 10 by adoption of the non-contact technique. The radio telephone 207 has facilities allowing the portable apparatus 20 to function as a mobile telephone or a PHS. The interface unit 208 serves as an interface among the CPU 201, the memory 202, the external storage unit 203, the input/display unit 205, the IC-card reader 206 and the radio telephone 207. The portable apparatus 20 can thus be implemented on a portable computer having an ordinary configuration such as a PDA (Personal Digital Assistant).

The functional configuration of the portable apparatus 20 shown in Fig. 4 is compared with the hardware configuration thereof shown in Fig. 5 as follows. The IC-card interface unit 21 corresponds to the IC-card reader 206. Most of such an IC-card readers 206 have been put to practical use. The radio-communication interface unit 22 corresponds to the radio telephone 207 and the input unit 24 and the display unit 25 correspond to the input/display unit 205. The IC-card reader 206 and the radio telephone 207 are not necessarily integrated with the portable apparatus 20. Instead, they can be provided externally as devices of the so-called external type. The encryption/decryption unit 23 and the control unit 26 are each a process carried out in an electronic computer. To put it concretely, they are each implemented by executing a program loaded into the memory 202 in the CPU 201. Such a program is normally stored in the external storage unit 203 including a hard disc or a portable storage medium in advance, and read out from the external storage unit 203 and loaded to the memory 202 when needed for execution by the CPU 201. As an alternative, such a program is downloaded into the external storage unit 203 including a hard disc or a floppy disc (FD) through the radio telephone 207 before being loaded into the memory 202. As another alternative, such a program is loaded into the memory 202 directly and executed by CPU 201/

Fig. 6 is a block diagram showing the configuration of the control apparatus 30 in a simple and plain manner. As shown in the figure, the control apparatus 30 comprises an ID data base 31, a communication interface unit 32, an encryption/decryption unit 33, an authentication unit 34 and a control unit 35.

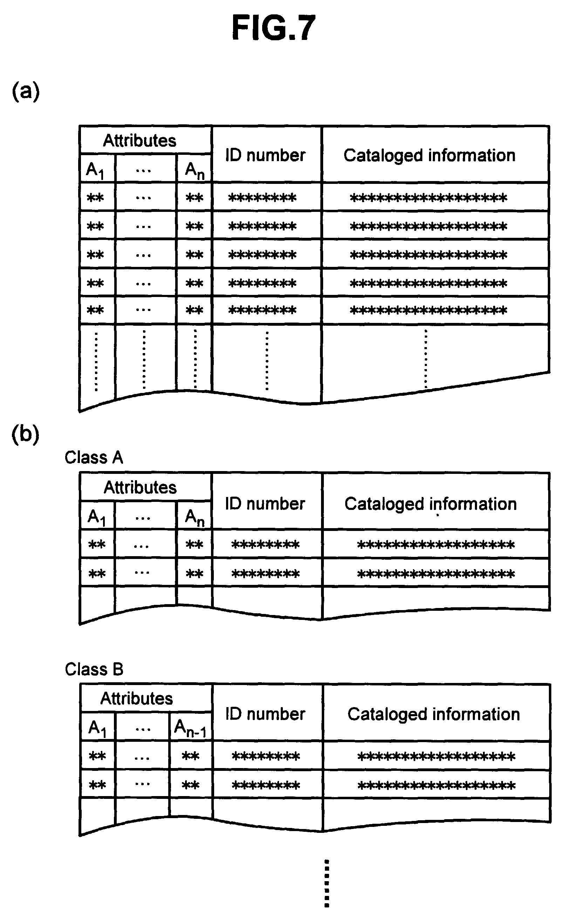

Figs. 7A and 7B are explanatory diagrams showing data stored in the ID data base 31. As shown in Fig. 7A, an ID number assigned by the provider of the electronic circuit chip 12 mounted on the IC card 10 to the electronic circuit chip 12 is cataloged in the ID data base 31, being associated with a set of attribute numbers which are also assigned to the electronic circuit chip 12 along with the ID number. Each row used for storing an ID number includes an area for storing information cataloged for the electronic circuit chip 12. The information is updated if necessary.

The communication interface unit 32 communicates with the portable apparatus 20 through the public network 50 and the radio base station 40.

The encryption/decryption unit 33 encrypts information to be transmitted to the portable apparatus 20 by using a common key kept secret between the portable apparatus 20 and the control apparatus 30, or by using a public key forming a pair in conjunction with a private key kept confidential by the portable apparatus 20. In addition, the encryption/decryption unit 33 decrypts encrypted information received from the portable apparatus 20 by using the common key kept secret between the portable apparatus 20 and the control apparatus 30, or by using a private key kept confidential by the control apparatus 30 itself. In this way, cryptocommunications can be carried out between the portable apparatus 20 and the control apparatus 30.

The authentication unit 34 decrypts a keyed MAC received from the portable apparatus 20 by using a public key forming a pair in conjunction with a private key used by the provider of the electronic circuit chip 12 and compares a result of the decryption with an ID number and a set of attribute numbers received along with the keyed MAC in order to authenticate the ID number and the set of attribute numbers.

The control unit 35 controls the control apparatus 30 to catalog information into the ID data base 31 and read out cataloged information from the ID data base 31.

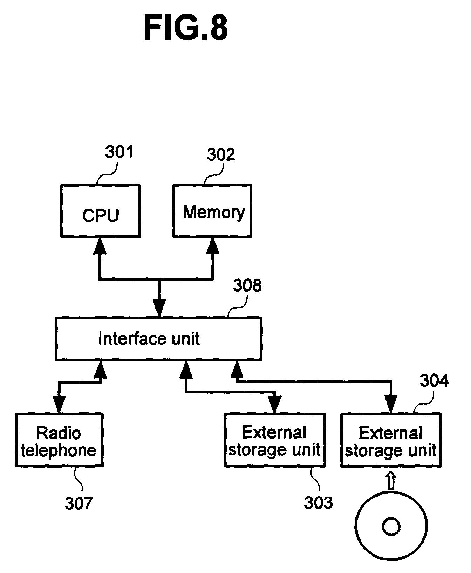

Fig. 8 is a block diagram showing a typical hardware configuration of the control apparatus 30. As shown in the figure, the control apparatus 30 comprises a CPU 301, a memory 302, an external storage unit 303 such as a hard-disc drive, an external storage unit 304 for reading out information from a portable storage medium such as a CD-ROM or an FD, a communication unit 307 for connecting the control apparatus 30 with the public network 50 and an interface unit 308 serving as an interface among the CPU 301, the memory 302, the external storage unit 303, the external storage unit 304 and the communication unit 307. The control apparatus 30 can thus be implemented on a portable computer having an ordinary configuration such as a PC (Personal Computer).

The functional configuration of the control apparatus 30 shown in Fig. 6 is compared with the hardware configuration thereof shown in Fig. 8 as follows. The ID data base 31 corresponds to the external storage unit 303 and the communication interface unit 32 corresponds to the communication unit 307. The encryption/decryption unit 33, the authentication unit 34 and the control unit 35 are each a process carried out in an electronic computer. To put it concretely, they are each implemented by executing a program loaded into the memory 302 in the CPU 301. Such a program is normally stored in the external storage unit 303 including a hard disc or a portable storage medium in advance, and read out from the external storage unit 303 and loaded into the memory 302 when needed for execution by the CPU 301. As an alternative, such a program is read out by the external storage unit 304 from a portable storage medium such as a CD-ROM or an FD and installed in the external storage unit 303 to be loaded into the memory 302 when needed for execution by the CPU 301. As another alternative, such a program is loaded into the memory 302 directly from a portable storage medium. As still another alternative, such a program is downloaded into a program-writable storage medium such as an FD mounted on the external storage unit 304 or the external storage unit 303 through the communication unit 307 before being loaded into the memory 302, or downloaded to the memory 302 directly for execution by the CPU 301.

The operation of the control system with a configuration described above is explained as follows.

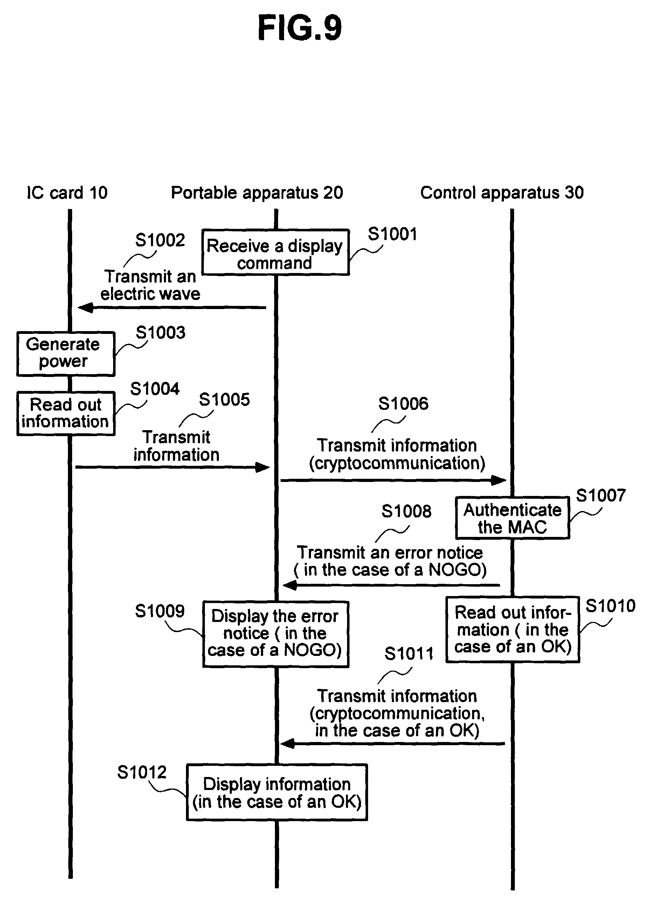

Fig. 9 is a diagram showing a sequence of operations carried out by the control system implemented by the embodiment to examine information cataloged in the ID data base of the control apparatus 30 for the IC card 10 as initiated by a command entered by the user of the portable apparatus 20. Processing using the cataloged information is exemplified for an operation to display the information. The operations are explained by referring to Fig. 9 as follows.

The sequence of operations is started when the user of the portable apparatus 20 takes the portable apparatus 20 to a position in close proximity to the IC card 10 and enters a command to display cataloged information for the IC card 10 to the input unit 24 of the portable apparatus 20.

As shown in Fig. 9, the sequence of operations is started with step S1001 at which the control unit 26 employed in the portable apparatus 20 receives the command to display cataloged information for the IC card 10 entered by the user via the input unit 24, activating the IC-card interface unit 21. At step S1002, the IC-card interface unit 21 generates an electric wave, outputting the wave to the IC card 10.

At step S1003, the antenna 122 of the electronic circuit chip 12 mounted on the IC card 10 receives the electric wave which drives the power generation circuit 121 to generate power activating the other components employed in the electronic circuit chip 12. At step S1004, the memory read circuit 128 reads out an ID number, a set of attribute numbers and a keyed MAC stored by the provider of the electronic circuit chip 12 in advance from the memory cell 125 in accordance with a clock signal generated by the counter circuit 127 and the clock extraction circuit 126. At step S1005, the selector 123 and the transmission/reception circuit 124 transmit the ID number, the set of attribute numbers and the keyed MAC to the portable apparatus 20 by way of the antenna 122.

At step S1006, the control unit 26 employed in the portable apparatus 20 receives the ID number, the set of attribute numbers and the keyed MAC from the IC card 10 through the IC-card interface unit 21, passing them on to the encryption/decryption unit 23 which encrypts and transmits, them to the control apparatus 30 by way of the radio-communication interface unit 22.

Then, the encryption/decryption unit 33 employed in the control apparatus 30 receives the encrypted ID number, the set of encrypted attribute numbers and the encrypted keyed MAC through the communication interface unit 32 for decrypting the encrypted information. The encryption/decryption unit 33 passes on information obtained as a result of the decryption to the control unit 35 which then forwards the information to the authentication unit 34 for authentication.

The authentication unit 34 checks whether or not the information has been altered. To put it concretely, the authentication unit 34 decrypts the keyed MAC received from the portable apparatus 20 by using a public key forming a pair in conjunction with a private key kept confidential by the provider of the electronic circuit chip 12 and compares a result of the decryption with the ID number and the set of attribute numbers (or their hash values) received along with the keyed MAC in order to authenticate the ID number and the set of attribute numbers. The fact that they match each other indicate that the keyed MAC is proven to be a result of encryption of the ID number and the set of attribute numbers (or their hash values) received from the portable apparatus 20 by using a private key known only by the provider of the electronic circuit chip 12. Thus, if they match each other, the ID number and the set of attribute numbers are determined to have not been altered. If they do not match each other, on the other hand, the ID number and/or the set of attribute numbers are determined to have been altered.

If the result of the authentication is a NG indicating that the ID number and/or the set of attribute numbers have been altered, the sequence of operations goes on to step S1008 at which the control unit 35 transmits an error notice to the portable apparatus 20 by way of the encryption/decryption unit 33 and the communication interface unit 32. At step S1009, the control unit 26 employed in the portable apparatus 20 receives the information from the control apparatus 30 through the radio-communication interface unit 22 and the encryption/decryption unit 23, recognizing that the information is the error notice. In this case, the control unit 26 displays the error notice on the display unit 25.

If the result of the authentication is an OK indicating that the ID number and the set of attribute numbers have not been altered, on the other hand, the sequence of operations goes on to step S1010 at which the control unit 35 reads out cataloged information associated with the ID number from the ID data base 31. To put it concretely, the control unit 35 searches the ID data base 31 for ID numbers matching with (or classified in) the set of attribute numbers received from the encryption/decryption unit 33. The control unit 35 further searches the ID numbers found in the search process mentioned above from the ID number received from the encryption/decryption unit 33. Subsequently, the control unit 35 reads out cataloged information from a row in the ID data base 31 indicated by the ID number matching with the ID number received from the encryption/decryption unit 33, supplying the information to the encryption/decryption unit 33 which then encrypts the information by using a common key kept secret between the portable apparatus 20 and the control apparatus 30, or by using a public key forming a pair in conjunction with a private key kept confidential by the portable apparatus 20. At step S1011, the encrypted information is transmitted to the portable apparatus 20 by way of the communication interface unit 32.

At step S1012, the encryption/decryption unit 23 employed in the portable apparatus 20 receives the encrypted information from the control apparatus 30 through the radio-communication interface unit 22 and decrypts the encrypted information by using the common key or a private key owned by the portable apparatus 20, supplying a result of the decryption to the control unit 26 which then displays the decrypted information on the display unit 25.

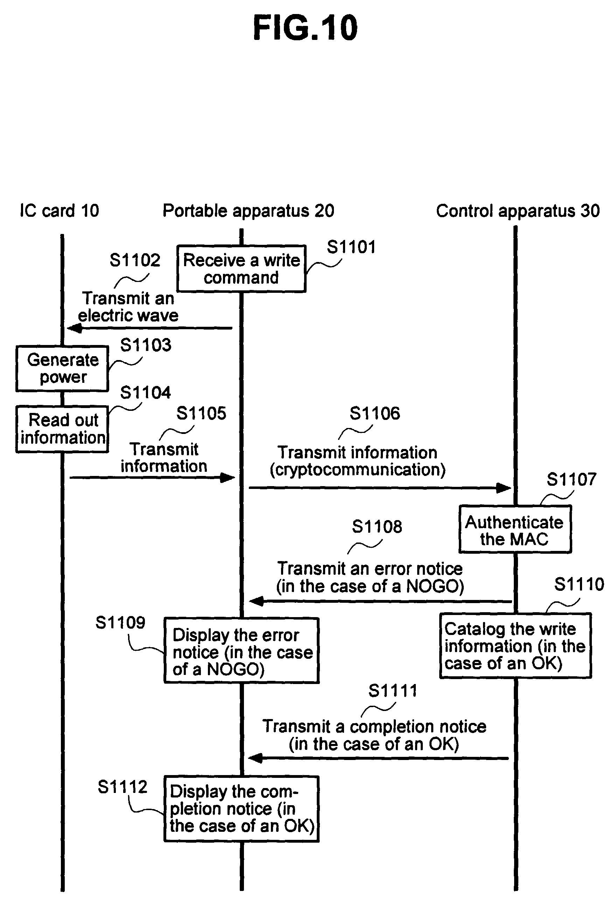

Fig. 10 is a diagram showing a sequence of operations carried out by the control system implemented by the embodiment to catalog information to be recorded in the ID data base 31 of the control apparatus 30 for the IC card 10 as initiated by a command entered by the user of the portable apparatus 20. The operations are explained by referring to Fig. 10 as follows.

The sequence of operations is started when the user of the portable apparatus 20 takes the portable apparatus 20 to a position in close proximity to the IC card 10 and enters a command to catalog information for the IC card 10 into the ID data base 31 of the control apparatus 30 to the input unit 24 employed in the portable apparatus 20.

As shown in Fig. 10, the sequence of operations is started with step S1101 at which the control unit 26 employed in the portable apparatus 20 receives the command to catalog information for the IC card 10 into the data base of the control apparatus 30 and the information to be cataloged which are entered by the user via the input unit 24, activating the IC-card interface unit 21. At step S1102, the IC-card interface unit 21 generates an electric wave, outputting the electric wave to the IC card 10.

At step S1103, the antenna 122 of the electronic circuit chip 12 mounted on the IC card 10 receives the electric wave which drives the power generation circuit 121 to generate power for activating the other components employed in the electronic circuit chip 12. At step S1104, the memory read circuit 128 reads out an ID number, a set of attribute numbers and a keyed MAC stored by the provider of the electronic circuit chip 12 in advance from the memory cell 125 in accordance with a clock signal generated by the counter circuit 127 and the clock extraction circuit 126. At step S1105, the selector 123 and the transmission/reception circuit 124 transmit the ID number, the set of attribute numbers and the keyed MAC to the portable apparatus 20 by way of the antenna 122.

At step S1106, the control unit 26 employed in the portable apparatus 20 receives the ID number, the set of attribute numbers and the keyed MAC from the IC card 10 through the IC-card interface unit 21, passing on them along with the information entered to the input unit 24 to be cataloged into the ID data base 31 of the control apparatus 30 to the encryption/decryption unit 23 which encrypts and transmits them to the control apparatus 30 by way of the radio-communication interface unit 22.

Then, the encryption/decryption unit 33 employed in the control apparatus 30 receives the encrypted ID number, the set of encrypted attribute numbers, the encrypted keyed MAC and the encrypted information to be cataloged in the ID data base 31 of the control apparatus 30 through the communication interface unit 32, decrypting the pieces of encrypted information. The encryption/decryption unit 33 passes on information obtained as a result of the decryption to the control unit 35 which then forwards the information to the authentication unit 34 for authentication.

The authentication unit 34 checks whether or not the ID number and/or the set of attribute numbers have been altered by using the keyed MAC in the same way as the step S1007 of the flowchart shown in Fig. 9.

If the result of the authentication is a NG indicating that the ID number and/or the set of attribute numbers have been altered, the sequence of operations goes on to step S1108 at which the control unit 35 transmits an error notice to the portable apparatus 20 by way of the encryption/decryption unit 33 and the communication interface unit 32. At step S1109, the control unit 26 employed in the portable apparatus 20 receives the information from the control apparatus 30 through the radio-communication interface unit 22 and the encryption/decryption unit 23, recognizing that the information is the error notice. In this case, the control unit 26 displays the error notice on the display unit 25. The portable apparatus 20 can also be notified of the altered (NG) state by using another means.

If the result of the authentication is an OK indicating that the ID number and the set of attribute numbers have not been altered, on the other hand, the sequence of operations goes on to step S1110 at which the control unit 35 employed in the control apparatus 30 catalogs the information received from the portable apparatus 20 into a row of the ID data base 31 having the corresponding ID number and the set of attribute numbers received from the portable apparatus 20. To put it concretely, the control unit 35 searches the ID data base 31 for ID numbers associated with (or classified in) the set of attribute numbers received from the encryption/decryption unit 33. The control unit 35 then searches the ID numbers found in the search operation received from the encryption/decryption unit 33 from the ID number cataloged. Subsequently, the control unit 35 catalogs the information into a row in the ID data base 31 having the ID number matching with the ID number received from the encryption/decryption unit 33, or updates existing information on the row, if any. At step S1111, the control unit 35 notifies the portable apparatus 20 that the operation to catalog the information onto the ID data base 31 has been completed through the encryption/decryption unit 33 and communication interface unit 32.

At step S1112, the control unit 26 employed in the portable apparatus 20 receives the notice of the completion from the control apparatus 30, displaying that notice on the display unit 25.

As described above, in order to catalog information into the ID data base of the control apparatus 30 for the IC card 10 in this embodiment, the portable apparatus 20 reads out an ID number from the IC card 10, transmitting the ID number and the information to be cataloged to the control apparatus 30 which then catalogs them into the ID data base 31 by associating the information to be cataloged with the ID number. In order to examine information cataloged in the ID data base 31 of the control apparatus 30 for the IC card 10, the portable apparatus 20 reads out an ID number from the IC card 10, transmitting the ID number to the control apparatus 30 which then reads out cataloged information associated with the corresponding ID number from the ID data base 31 and transmits the cataloged information to the portable apparatus 20. The portable apparatus 20 receives the cataloged information from the control apparatus 30 for carrying out processing such as processing to display the information to the user.

In this way, since information cataloged in the ID data base 31 of the control apparatus 30 for the IC card 10 is cataloged and controlled in the control apparatus 30 by being associated with ID information of the IC card 10, the cataloged information therein appears to the user as if the information were stored in the IC card 10, even if the memory mounted on the IC card 10 is a read-only ROM.

If information is to be actually written into or read out from a writable RAM mounted on the IC card 10 through non-contact accesses, it will take a longer time to make an access to such a RAM than an access to the control apparatus 30. Thus, in this embodiment, information can be cataloged into and retrieved from the ID data base 31 of the control apparatus 30 at a higher speed.

According to this embodiment, information can be cataloged into and retrieved from the ID data base 31 of the control apparatus 30 at a higher speed for a case in which ID numbers of a number of IC cards 10 are controlled by the control apparatus 30.

In this embodiment, a keyed MAC and an ID number are stored in the IC card 10 in advance. The keyed MAC is information for authenticating the ID number which can be authenticated by using a key owned by the control apparatus 30. Thus, since the keyed MAC and the key owned by the control apparatus 30 can be used to check whether or not the ID number stored in the IC card 10 has been altered, information security can be enhanced.

It should be noted that, in this embodiment, as information stored in the electronic circuit chip 12, the number of attribute numbers A1 to An used therein may vary from chip to chip. In this case, it is necessary to additionally store class information showing the number of attribute numbers A1 to An used in the electronic circuit chip 12 as shown in Fig. 3B. With such class information added, ID numbers can be cataloged in the ID database 31 by associating the ID numbers with a set of attribute numbers and class information as shown in Fig. 7B. The ID data base 31 in the control apparatus 30 is searched for desired information cataloged for the IC card 10 by narrowing the search range into a sub-range defined by particular class information, further narrowing the sub-range into a sub-sub-range defined by a specific set of attribute numbers and finally searching the sub-sub-range for the desired information indicated by a particular ID number.

The embodiment can be altered by providing the portable apparatus 20 with the authentication unit 34 employed in the control apparatus 30 as shown in Fig. 6. In this case, an ID number and a set of attribute numbers read out from the IC card 10 are authenticated by the authentication unit 34 in the portable apparatus 20 by using the keyed MAC read out from the IC card 10 along with the ID number and the set of attribute numbers. If the ID number and the set of attribute numbers are verified to have not been altered, they are transmitted to the control apparatus 30.

Unlike the embodiment described above, there is a case in which an operation to examine information cataloged in the ID data base 31 of the control apparatus 30 for the IC card 10 is carried out by the user of the portable apparatus 20 to be followed by an operation to catalog information into the ID data base 31 of the control apparatus 30. To put it in detail, in a typical operation to examine information cataloged in the ID data base 31 of the control apparatus 30 for the IC card 10, the cataloged information is displayed on the display unit 25 of the portable apparatus 20 and altered by the user by operating the input unit 24 in accordance with a command to catalog the information entered by the user. In such a case, the operation to catalog the information into the ID data base 31 of the control apparatus 30 is carried out by executing the processing represented by the flowchart shown in Fig. 10 excluding the steps S1102 to S1105 and the steps S1107 to S1109.

Another embodiment of the present invention is described as follows.

Another embodiment is different from the embodiment described above in that, when a portable apparatus examines pieces of information cataloged in the ID data base of the control apparatus for a plurality of IC cards 10 containing the same set of attribute numbers stored in the electronic circuit chips 12 each mounted on one of the IC cards 10, in this other embodiment, an access is not made to the control apparatus each time information such as an ID number and a set of attribute numbers are read out from the IC card 10 in order to carry out the processing at a higher speed.

In this other embodiment, the configurations of the portable apparatus 60 and the control apparatus 70 are different respectively from the configurations of the portable apparatus 20 and the control apparatus 30 employed in the embodiment described above. In addition, the structure of information stored in the ID data base 71 used in this embodiment is different from the structure of information stored in the ID data base 31 used in the embodiment described above.

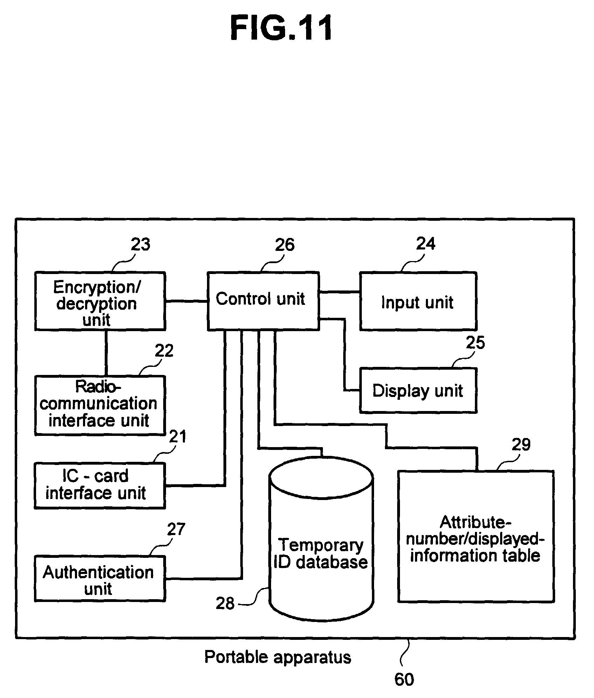

Fig. 11 is a block diagram showing the configuration of the portable apparatus 60 provided by the other embodiment of the present invention in a simple and plain manner.

As shown in the figure, the portable apparatus 60 of this embodiment is different from the portable apparatus 20 shown in Fig. 4 in that the former is provided with an authentication unit 27, a partial ID data base 28 and an attribute-number/displayed-information table 29.

The authentication unit 27 has the same function as the authentication unit 34 employed in the control apparatus 30 shown in Fig. 6.

The partial ID data base 28 is used for temporarily holding a part of data stored in the ID data base 31 received from the control apparatus 70.

The attribute-number/displayed-information table 29 includes information pairs each provided for a set of attribute numbers or a set of IC-card attributes. Each of the pairs comprises a set of attribute numbers and information to be displayed for the set of attribute numbers which are assigned to and associated with the information. The contents of the attribute-number/displayed-information table 29 is updated by information downloaded from the control apparatus 70 periodically or in accordance with a command entered by the user.

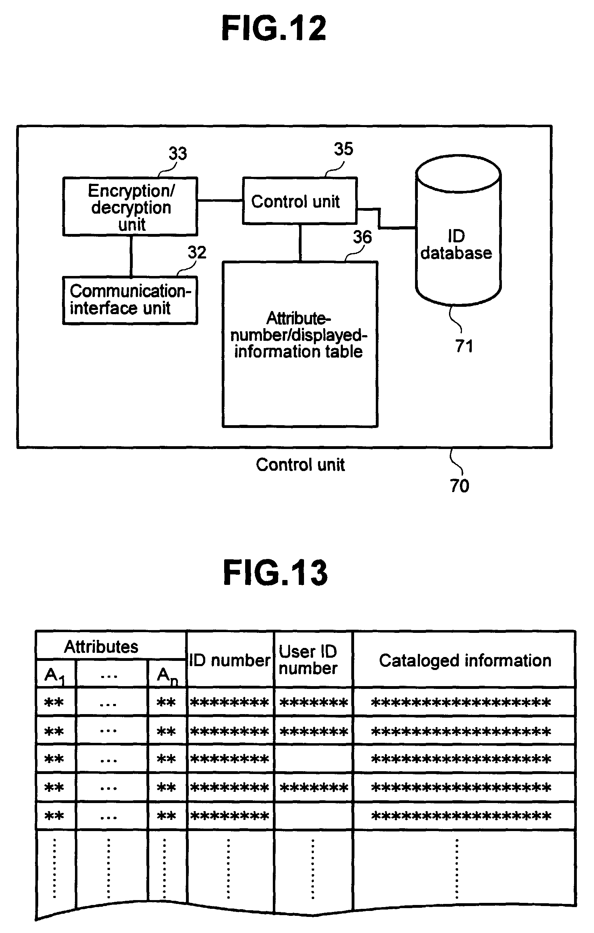

Fig. 12 is a block diagram showing the configuration of the control apparatus 70 provided by the other embodiment in a simple and plain manner.

As shown in the figure, the control apparatus 70 employed in this embodiment is different from the control apparatus 30 shown in Fig. 6 in that, the former does not have the authentication unit 34, but is provided with an attribute-number/displayed-information table 36. In addition, the structure of information stored in the ID data base 71 used in this embodiment is different from the structure of information stored in the ID data base 31 used in the previous embodiment as described above.

Much like the attribute-number/displayed-information table 29, the attribute-number/displayed-information table 36 includes information pairs each provided for a set of attribute numbers A1 to An or a set of IC-card attributes wherein each of the pairs comprises a set of attribute numbers and information to be displayed for the set of attribute numbers which are assigned to and associated with the information. The contents of the attribute-number/displayed-information table 36 are downloaded to the portable apparatus 60 periodically or in accordance with a command received from the portable apparatus 60.

In this way, the contents of the attribute-number/displayed-information table 29 stored in the portable apparatus 60 are updated with the contents of the attribute-number/displayed-information table 36.

As shown in Fig. 13, the ID data base 31 is used for cataloging ID numbers each assigned by the provider of an electronic circuit chips 12 mounted on an IC card 10 to the electronic circuit chip 12 by associating each of the ID numbers to attribute numbers assigned along with the ID number. An area for cataloging a user ID number for identifying the purchaser of an IC card 10 and information is provided on each row for an ID number and attribute numbers associated with the ID number. If necessary, the user ID number and the information are updated.

The operation of the control system having a configuration described above is explained as follows.

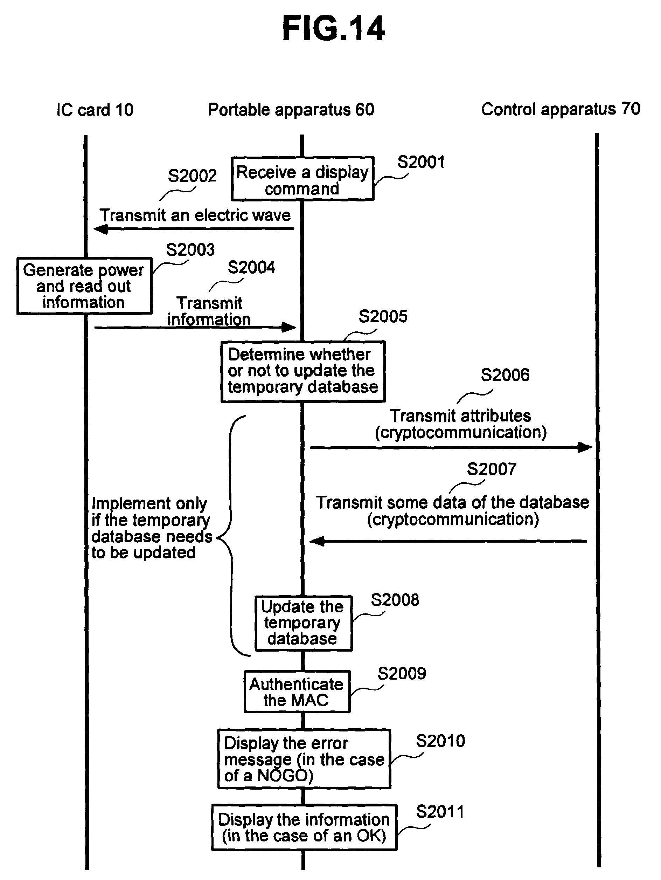

Fig. 14 is a diagram showing a sequence of operations carried out by the control system to examine information cataloged in the ID data base 71 of the control apparatus 70 for the IC card 10 and to perform processing using the information as initiated by a command entered by the user of the portable apparatus 60. Much like the sequence of operations shown in Fig. 9, the processing using the cataloged information is exemplified by an operation to acquire transmitted information and display the information. The sequence of operations is started when the user of the portable apparatus 60 takes the portable apparatus 60 to a position in close proximity to the IC card 10 and enters a command to display information cataloged for the IC card 10 to the input unit 24 of the portable apparatus 60.

Pieces of processing carried out at steps S2001 to S2004 are the same as the steps S1001 to S1005 of the sequence of operations shown in Fig. 9. At step S2005, the control unit 26 employed in the portable apparatus 60 forms a judgment as to whether or not it is necessary to update the contents of the partial ID data base 28 on the basis of information received from the IC card 10 through the IC-card interface unit 21. To put it concretely, if a set of attribute numbers received from the IC card 10 are included in the contents of the partial ID data base 28, it is not necessary to update the contents of the partial ID data base 28. If a set of attribute numbers received from the IC card 10 are not included in the contents of the partial ID data base 28, or if no information is stored in the partial ID data base 28, on the other hand, it is necessary to update the contents of the partial ID data base 28.

If it is determined necessary to update the contents of the partial ID data base 28, the control unit 26 delivers the set of attribute numbers to the encryption/decryption unit 23 which then encrypts them before transmitting them to the control apparatus 70 by way of the radio-communication interface unit 22 at step S2006.

In the control apparatus 70, the encryption/decryption unit 33 decrypts the encrypted information received from the portable apparatus 60 through the communication interface unit 32. Attribute numbers obtained as a result of the decryption are delivered to the control unit 35. The control unit 35 searches the ID data base 71 for an ID number of a row for cataloging the set of attribute numbers received from the encryption/decryption unit 33, a user ID number and information cataloged on the row. Fig. 13 is an explanatory diagram showing data stored in the ID data base 71. The ID number of a row, the user ID number and the cataloged information are supplied to the encryption/decryption unit 33 which then encrypts them prior to transmission to the portable apparatus 60 by way of the communication interface unit 32 at step S2007.

In the portable apparatus 60, the encryption/decryption unit 23 decrypts the encrypted information received through the radio-communication interface unit 22. Information obtained as a result of the decryption is delivered to the control unit 26 which then updates the partial ID data base 28 by cataloging the information therein and associating the information with the set of attribute numbers received from the IC card 10 at step S2008. Then, the set of attribute numbers and the keyed MAC received from the IC card 10 are supplied to the authentication unit 27 for authentication at step S2009.

If the result of the judgment formed at the step S2005 indicates that it is not necessary to update the contents of the partial ID data base 28, on the other hand, the sequence of operations goes on from the step S2005 directly to the step S2009.

In either case, the sequence goes on to the step S2009 at which the authentication unit 27 forms a judgment as to whether or not the ID number and/or the set of attribute numbers have been altered on the basis of the keyed MAC.

If the result of the judgment is NG indicating that the ID number and/or the set of attribute numbers have been altered, the sequence of operations goes on to step S2010 at which the control unit 26 employed in the portable. apparatus 60 displays an error message on the display unit 25.

If the result of the judgment is an OK indicating that the ID number and the set of attribute numbers have not been altered, on the other hand, the sequence of operations goes on to step S2011 at which the control unit 26 searches the partial ID data base 28 for an ID number matching with the ID number received from the IC card 10, reading out the user ID number and cataloged information associated with the ID number from the partial ID data base 28. In addition, the control unit 26 searches the attribute-number/displayed-information table 29 for information to be displayed for the set of attribute numbers received from the IC card 10. Then, the user ID number, the cataloged information and the information for display obtained from the attribute-number/displayed-information table 29 are displayed on the display unit 25.

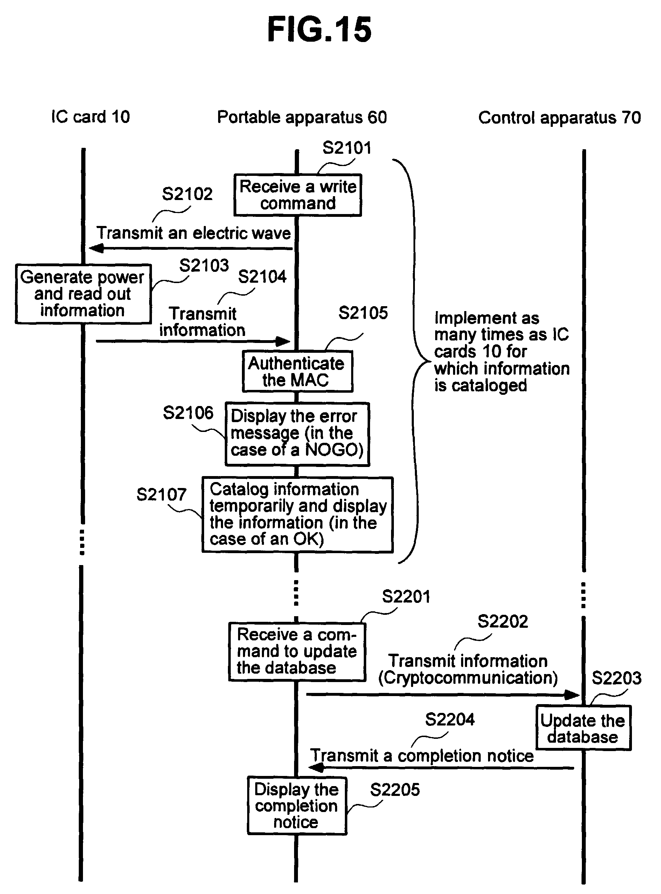

Fig. 15 is a diagram showing a sequence of operations carried out by the user of the portable apparatus 60 to write information to be cataloged in the ID data base 71 of the control apparatus 70 for the IC card 10. The operations are explained by referring to Fig. 15 as follows.

The sequence of operations is started when the user of the portable apparatus 60 takes the portable apparatus 60 to a position in close proximity to the IC card 10 and enters a command to catalog a user ID number or information for the IC card 10 to the input unit 24 of the portable apparatus 60.

Pieces of processing carried out at steps S2101 to S2104 are the same as the steps S1101 to S1105 of the sequence of operations shown in Fig. 10.

At step S2105, an ID number, a set of attribute numbers and a keyed MAC received from the IC card 10 are supplied by the control unit 26 employed in the portable apparatus 60 to the authentication unit 27 for authentication. The authentication unit 27 forms a judgment as to whether or not the ID number and/or the set of attribute numbers have been altered on the basis of the keyed MAC.

If the result of the judgment is a NG indicating that the ID number and/or the set of attribute numbers have been altered, the sequence of operations goes on to step S2106 at which the control unit 26 employed in the portable apparatus 60 displays an error message on the display unit 25. If the result of the judgment is an OK indicating that the ID number and the set of attribute numbers have not been altered, on the other hand, the sequence of operations goes on to step S2107 at which the control unit 26 of the portable apparatus 60 temporarily stores a user ID number or information to be cataloged entered by the user via the input unit 24 in the memory 202 by associating the user ID number or the information with the ID number or the set of attribute numbers received from the IC card 10. A message notifying the user of the operation to temporarily store the user ID number or the information is displayed on the display unit 25.

The pieces of processing of the steps S2101 to S2107 are carried out repeatedly as many times as users of the portable apparatuses 60 who each take the portable apparatus 60 to a position in close proximity to the IC card 10 and enter a command to catalog a user ID number or information for the IC card 10 to the input unit 24 of the portable apparatus 60 for the numbers of IC card 10 to be cataloged. As a result, in the memory 202, the number of combinations each comprising a temporarily cataloged user ID number or temporarily cataloged information, an ID number and a set of attribute numbers increases. If the user of the portable apparatus 60 enters a command to update the ID data base 71 of the control apparatus 70 to the input unit 24 of the portable apparatus 60, the processing described below is carried out to catalog the combinations each comprising a temporarily cataloged user ID number or temporarily cataloged information, an ID number and a set of attribute numbers into the ID data base 71.

When the control unit 26 of the portable apparatus 60 receives a command to update the ID data base 71 entered by the user to the input unit 24 of the portable apparatus 60 at step S2201, the control unit 26 reads out all the combinations each comprising a temporarily cataloged user ID number or temporarily cataloged information, an ID number and a set of attribute numbers from the memory 202, supplying the combinations to the encryption/decryption unit 23. If there is a combination including a set of attribute numbers matching with those stored in the partial ID data base 28, data stored in a row in the partial ID data base 28 indicated by the matching with set of attribute numbers is updated with the data of the combination to reflect the combination in the partial ID data base 28. The encryption/decryption unit 23 encrypts the information included in the combinations by using a common key kept secret between the portable apparatus 60 and the control apparatus 70, or by using a public key forming a pair in conjunction with a private key kept confidential by the control apparatus 70. At step S2202, the encryption/decryption unit 23 transmits the encrypted information to the control apparatus 70 by way of the radio-communication interface unit 22.

In the control apparatus 70, the encryption/decryption unit 33 decrypts the encrypted information received through the communication interface unit 32. Combinations each composed of a user ID number or information to be cataloged, an ID number and a set of attribute numbers obtained as a result of the decryption are all supplied to the control unit 35. The control unit 35 searches the data base 71 for rows each matching with an ID number and a set of attribute numbers included in any of the combinations received from the encryption/decryption unit 33, updating the user ID number or the information to be cataloged in each of the rows with the user ID number or the information included in the combination with an ID number and a set of attribute numbers matching with those of the row at step S2203. As a result, the contents of the combinations temporarily stored in the memory 202 are reflected in the updated ID data base 71.

When the operation to update the data base 71 is completed, the control unit 35 of the control apparatus 70 transmits a completion notice to the portable apparatus 60 by way of the encryption/decryption unit 33 and the communication interface unit 32 at step S2204. The control unit 26 employed in the portable apparatus 60 displays the completion notice received through the radio-communication interface unit 22 and the encryption/decryption unit 23 on the display unit 25 at step S2205.

According to this embodiment, when the user of the portable apparatus 60 examines pieces of information stored in the data base 71 of the control apparatus 70 for a plurality of IC cards 10 consecutively one after another with the IC cards 10 containing the same set of attribute numbers, the control apparatus 70 is not necessary to be accessed each time an ID number is read out from one of the IC cards 10. In this way, it is possible to carry out the processing to search data base 71 in a shorter period of time.

By the same token, according to this embodiment, when the user of the portable apparatus 60 stores pieces of information in the ID data base 71 of the control apparatus 70 for a plurality of IC cards 10 consecutively one after another with the IC cards 10 containing the same set of attribute numbers, the control apparatus 70 is not necessary to be accessed each time an ID number is read out from one of the IC cards 10. In this way, it is possible to carry out the processing to catalog ID data base 71 in a shorter period of time.

Furthermore, according to this embodiment, IC cards 10 can be controlled by using user ID numbers as original control numbers without being aware of ID numbers.

Moreover, in this embodiment, the attribute-number/displayed-information table 29 is used to allow cataloged information or a user ID number for an IC card 10 to be displayed on the portable apparatus 60 along with attributes represented by attribute numbers read out from the IC card 10. As a result, IC cards 10 can be controlled with a high degree of efficiency.

The partial ID data base 28 can also be provided in another computer which is locally connected to the portable apparatus 60.

In the other embodiment described above, there is a case in which an operation to examine information cataloged in the ID data base 71 of the control apparatus 70 for the IC card 10 is carried out by the user of the portable apparatus 60 to be followed by an operation to catalog information into the ID data base 71 of the control apparatus 70. To put it in detail, in a typical operation to examine information cataloged in the ID data base 71 of the control apparatus 70 for the IC card 10, the information displayed on the display unit 25 of the portable apparatus 60 is modified by the user by operating the input unit 24. In such a case, the operation to catalog the information into the ID data base 71 of the control apparatus 70 is carried out by executing the processing represented by the flowchart shown in Fig. 15 excluding the steps S2102 to S2106 in accordance with a command to catalog the information entered by the user. To be more specific, after information to be cataloged for a plurality of IC cards 10 or user ID numbers for the IC cards 10 are temporarily stored in the memory 202 employed in the portable apparatus 60 by executing the pieces of processing of the steps S2001 to S2011 in the flowchart shown in Fig. 14 and the steps S2101 through S2107 in the flowchart shown in Fig. 15 as a processing sequence, the processing of the steps S2201 to S2205 of the flowchart shown in Fig. 15 is carried out to reflect the cataloged information or the user ID temporarily stored in the memory 202 for the IC cards 10 in the ID data base 71 of the control apparatus 70.

It should be noted that the encryption/decryption unit 23 of the portable apparatus 20 or 60 and the encryption/decryption unit 33 of the control apparatus 30 or 70 can also be implemented by LSI hardware in place of programs executed by the CPUs.

In addition, the processing using cataloged information is not limited to an operation to display the information on a display unit as described earlier. For example, the processing can also be an operation to notify the user by sound. In this case, the portable apparatus is provided with an audio output means in place of a display means.

Applications of the embodiments of the present invention described above are described as follows.

### (1) Application to personal identification cards

By additionally recording information such as the birthday and a picture of the user of an IC card 10 as information to be cataloged for the IC card 10, the IC card 10 can be used as a personal identification card. By further including a term of validity in the information, the IC card 10 can be used as a card that needs to be renewed such as a driver license.

### (2) Application to gift voucher

By additionally recording information as to whether the IC card 20 is usable or not and a period of validity of the IC card 10 as information to be cataloged for the IC card 10, the IC card 10 can be used as a gift voucher that can be used only once or a gift voucher which is valid only for a predetermined period of time. An example of a gift voucher that can be used only once is a book voucher. History information such as time and date as well as a place at which the IC card 10 is used can also be cataloged. History information including the same date and the same time but different places of the use of the IC card 10 indicates that it is quite within the bounds of possibility that the IC card has been illegally copied.

### (3) Application to commodity tags

By additionally recording the name and the type of a commodity or information on people involved in the manufacturing of the commodity such as the manufacturer or the distributor as information to be cataloged for the IC card 10 and attaching the IC card 10 to the commodity, the IC card 10 can be used as a tag of the commodity. The user of the portable apparatus who are commodity sellers, for example, can use a commodity tag for stock and inventory control. On the other hand, the user of the portable apparatus who are potential commodity buyers, for example, can use the commodity tag as a catalog describing detailed information on the commodity. As other applications, a description of an article displayed in an exhibition can be given by use of such tags.

### (4) Application to bar codes

By recording a code specified by a conventional bar code in an electronic circuit chip 12 and appending the electronic circuit chip 12 directly to a commodity or the package of the commodity and by using data related to the code as information to be cataloged for the IC card 10 of the chip 12, the IC card 10 can be used as a bar code.

Where the portable apparatus is connected to the control apparatus by a dedicated network and thus communication security is secured, cryptocommunication may not be necessary to be adopted.

A plurality of control apparatuses can also be provided. In this case, one of the control apparatuses is typically connected to the portable apparatus by a dedicated network.

The portable apparatus is not required to have a radio communication function. Any communication function will work as long as the function can be used to communicate with the control apparatus.

As an apparatus to fetch information from an IC card 10 and transmit the information to the control apparatus, a desk-top electronic computer can also be used.

A keyed MAC stored in an electronic circuit chip 12 can be generated in addition to an ID number and a set of attribute numbers stored in the electronic circuit chip 12 by encrypting predetermined information unique to the IC card 10 for mounting the chip 12 or a hash value of these information which includes where to position the chip 12 on the IC card 10 and the size of the chip 12 or the card 10. In this case, the keyed MAC is authenticated in the portable apparatus as follows.

First of all, the keyed MAC is read out from the electronic circuit chip 12 of the IC card 10 along with the ID number and the set of attribute numbers and then decrypted. Data obtained as a result of the decryption is then examined to check if the data includes data that matches the ID number and the set of attribute numbers read out from the electronic circuit chip 12 or their hash values in order to determine whether or not the ID number and/or the set of attribute numbers have been altered.

Then, predetermined information unique to the IC card 10 is measured. As described above, the information includes where to position the chip 12 on the IC card 10 and the size of the electronic circuit chip 12 or the IC card 10. Results of the measurement are checked to see if the matching with data are included in the data obtained as a result of the decryption.

Assume that the information stored in the electronic circuit chip 12 mounted on the IC card 10 is copied as it is to another electronic circuit chip 12. In this case, however, the step taken above will detect an illegal copy from the fact that the results of the measurement are not included in the data obtained as a result of the decryption due to a difference in mounting position on the IC card 10 between the electronic circuit chips 12 and a difference in size between the chips 12 or the cards 10, even if the differences are small.

It should be noted that information unique to the IC card 10 can be measured as follows. The portable apparatus is provided with a camera for taking a photograph of the IC card 10 at a predetermined photographing distance and magnification to produce a picture of the IC card 10. The picture can then be used as a base for the measurement.

In the embodiments described above, as a keyed MAC stored in the electronic circuit chip 12 mounted on the IC card 10, it is possible to use encrypted data using a common key kept confidential by the user of the electronic circuit chip 12 between the portable and control apparatuses. In this case, the common key is used for determining whether or not an ID number and/or a set of attribute numbers associated with the keyed MAC have been altered. The key for generating a keyed MAC may vary from each one of attribute numbers.

If a plurality of electronic circuit chips 12 storing the same information are mounted on an IC card 10, the information can be read out from the IC card 10, even if any one of the chips 12 are damaged. Thus, the life of the IC card 10 is prolonged.

In this case, the IC-card interface unit 21 employed in the portable apparatus generates an electric wave to fetch information from each of the electronic circuit chips 12 mounted on the IC card 10. The number of electronic circuit chips 12 not responding to the electric wave (not transmitting information) is also counted. If the number of such electronic circuit chips 12 exceeds a predetermined value, the portable apparatus displays a message on the display unit 25, notifying the user that it is time to replace the IC card 10. If a plurality of electronic circuit chips 12 respond to the electric wave, the IC-card interface unit 21 selects one of the responses received from the electronic circuit chips 12, supplying the selected one to the control unit 36.

The embodiments described above can be configured so that only the user of the portable apparatus having a predetermined authority is allowed to catalog information for the IC card 10 through the portable apparatus. In such a configuration, typically, information to be cataloged for the IC card 10 and a command to catalog such information are accepted only when the user enters a predetermined password or inserts a predetermined key.

The present invention can be widely used in applications where the electronic circuit chip 12 is attached directly to a commodity or the package of the commodity.

The present invention appears to the user as if it were possible to store information with an amount exceeding the capacity of a storage medium such as an IC card with an electronic circuit chip mounted thereon or a magnetic recording card into the storage medium, or to store information into a read-only storage medium.

While the present invention has been described in detail and pictorially in the accompanying drawings, it is not limited to such details since many changes and modifications recognizable to those of ordinary skill in the art may be made to the invention without departing from the true spirit and the scope thereof.

## Claims

1. A method adopted in a control apparatus (30, 70) for controlling ID information of a storage medium (10) stored in said storage medium (10) in conjunction with a terminal (20, 60) for reading out information from said storage medium and used to catalogue information for said storage medium into said control apparatus whereby:
in an operation to catalogue information to be catalogued for said storage medium into said control apparatus (30, 70),
said terminal (20, 60) receives said information to be catalogued, reads out said ID information from said storage medium (10) and transmits said information to be catalogued and said ID information to said control apparatus (30, 70); and
said control apparatus (30, 70) catalogues said information to be catalogued and said ID information therein by associating said information to be catalogued with said ID information, and
in an operation to examine information already catalogued in said control apparatus (30, 70) for said storage medium (10),
said terminal (20, 60) reads out said ID information from said storage medium (10) and transmits said ID information to said control apparatus (30, 70);
said control apparatus (30, 70) transmits said information already catalogued therein and associated with said ID information to said terminal (20, 60); and
said terminal (20, 60) receives said already catalogued information from said control apparatus (30, 70).

2. A method of cataloguing information for a storage medium into a control apparatus according to claim 1, wherein:
said storage medium (10) is used for storing authentication information for authenticating said ID information along with said ID information in advance wherein said ID information can be authenticated by using a key owned by said control apparatus (30, 70);
in an operation to catalogue information to be catalogued for said storage medium (10) into said control apparatus (30, 70),
said terminal (20, 60) receives said information to be catalogued, reads out said ID information and said authentication information from said storage medium (10) and transmits said information to be catalogued, said authentication information and said ID information to said control apparatus (30, 70); and
said control apparatus (30, 70) authenticates said ID information on the basis of said authentication information by using said key and catalogues said information to be catalogued and said ID information therein by associating said information to be catalogued with said ID information provided that a result of authentication indicates that said ID information is valid, and
in an operation to examine information already catalogued in said control apparatus (30, 70) for said storage medium (10),
said terminal (20, 60) reads out said ID information and said authentication information from said storage medium (10) and transmits said ID information and said authentication information to said control apparatus (30, 70);
said control apparatus (30, 70) authenticates said ID information on the basis of said authentication information by using said key and transmits information already catalogued therein and associated with said ID information to said terminal (20, 60) provided that a result of authentication indicates that said ID information is valid; and
said terminal (20, 60) receives said already catalogued information from said control apparatus (30, 70).

3. A method of cataloguing information for a storage medium into a control apparatus according to claim 1 or 2, wherein:
said storage medium (10) is used for storing attribute information along with said ID information in advance;
said control apparatus (30, 70) controls pieces of ID information of a plurality of said storage mediums and pieces of information each catalogued for one of said storage mediums by associating said pieces of ID information and said pieces of catalogued information with pieces of attribute information stored in said storage mediums;
said terminal (20, 60) controls some of said pieces of ID information and some of said pieces of catalogued information controlled by said control apparatus (30, 70) and associated with at least one of said pieces of attribute information; and
in an operation to examine information already catalogued in said control apparatus (30, 70) for a particular one (10) of said storage mediums, said terminal (20, 60) reads out ID information and attribute information from said storage medium (10), checking whether or not said ID information read out from said particular storage medium and associated with said attribute information also read out from said particular storage medium is one of said pieces of ID information controlled by itself, and
if said ID information read out from said particular storage medium and associated with said attribute information also read out from said particular storage medium is not one of said pieces of ID information controlled by itself, said terminal (20, 60) executes the steps of:
acquiring ID information and catalogued information associated with said attribute information read out from said particular storage medium (10) from said control apparatus (30, 70);
using said ID information and said catalogued information acquired from said control apparatus (30, 70) to update said pieces of ID information and said pieces of catalogued information controlled by itself; and
searching said pieces of ID information controlled by itself for a piece matching with said ID information read out from said particular storage medium (10); and
acquiring one of said pieces of catalogued information controlled by itself and associated with said piece of ID information matching said ID information read out from said particular storage medium (10), but
if said ID information read out from said particular storage medium (10) and associated with said attribute information also read out from said particular storage medium is one of said pieces of ID information controlled by itself, on the other hand, said terminal (20, 60) immediately executes the steps of:
searching said pieces of ID information controlled by itself for a piece matching said ID information read out from said particular storage medium (10); and
acquiring one of said pieces of catalogued information controlled by itself and associated with said piece of ID information matching with said ID information read out from said particular storage medium (10).

4. A method of cataloguing information for a storage medium into a control apparatus according to any of claims 1 to 3, wherein:
said control apparatus (30, 70) controls ID information of said storage medium (10) and information catalogued for said storage medium by associating said ID information and said catalogued information with user ID information,
in an operation to catalogue user ID information into said control apparatus (30, 70),
said terminal (20, 60) receives said user ID information, reads out said ID information from said storage medium (10) and transmits said user ID information and said ID information to said control apparatus (30, 70); and
said control apparatus (30, 70) catalogues said user ID information and said ID information therein by associating said user ID information with said ID information, and
in an operation to examine user ID information already catalogued in said control apparatus (30, 70) for said storage medium (10),
said terminal (20, 60) reads out said ID information from said storage medium (10) and transmits said ID information to said control apparatus (30, 70); and
said control apparatus (30, 70) transmits said user ID information already catalogued therein and associated with said ID information to said terminal (20, 60).

5. A method of cataloguing information for a storage medium into a control apparatus (30, 70) according to any of claims 1 to 4, wherein said terminal (20, 60) displays said already catalogued information.

6. A control system comprising:
a terminal (20, 60) capable of making an access to a storage medium (10) used for storing ID information; and
a control apparatus (30, 70) for controlling said ID information of said storage medium (10), wherein:
said control apparatus (30, 70) comprises:
a data base (31, 71) used for cataloguing ID information of said storage medium (10) and information to be catalogued for said storage medium with said ID information associated with said information catalogued for said storage medium; and
a search means (32, 33, 35) for searching said data base for catalogued information associated with ID information received from said terminal (20, 60) and transmitting said catalogued information to said terminal, whereas
said terminal (20, 60) comprises:
a reading means (21, 22, 23) for reading out ID information from said storage medium (10) and transmitting said ID information to said control apparatus; and
an acquirement means (22, 23) for acquiring catalogued information transmitted from said control apparatus.

7. A control system comprising:
a terminal (60) capable of making an access to one of storage mediums (10) used for storing ID information and an attribute information; and
a control apparatus (70) for controlling pieces of ID information of a plurality of said storage mediums (10), wherein:
said control apparatus (70) comprises:
a data base (71) used for cataloguing pieces of ID information, pieces of attribute information of said storage mediums (10) and pieces of information each catalogued for one of said storage mediums by associating said pieces of ID information and said pieces of attribute information with said pieces of catalogued information;
a search means (32, 33, 35) for searching said data base (71) for a particular one of said pieces of catalogued information and a particular one of said pieces of ID information associated with attribute information received from said terminal (60) and transmitting said particular piece of catalogued information and said particular place of ID information to said terminal, and
said terminal (60) comprises:
a temporary data base (28) used for cataloguing some of said pieces of ID information and some of said pieces of catalogued information catalogued in said data base of said control apparatus (70) and associated with at least one of said pieces of attribute information;
a reading means (21) for reading out ID information and attribute information from said storage medium (10) associated with said terminal (60);
an acquirement means (26) for searching said temporary data base (28) for one of said pieces of ID information and one of said pieces of catalogued information matching said attribute information read out by said reading means (21); and
a transmission/update means (22, 23, 26) for transmitting said attribute information read out by said reading means (26) to said control apparatus (70) to acquire ID information and catalogued information for said attribute information to be used for updating the contents of said temporary data base (28) in case said acquiring means (26) does not find one of said pieces of ID information and one of said pieces of catalogued information matching said attribute information in said temporary data base.

8. A control system according to claim 6 or 7, wherein:
said terminal (20, 60) further comprises a reception means (24) for receiving information to be catalogued for said storage medium (10), and said reading means (21, 22, 23) reads out ID information from said storage medium and transmitting said information to be catalogued and said ID information to said control apparatus (30, 70) upon receiving information to be catalogued by said receiving means (24); and
said control apparatus (30, 70) further comprises a cataloguing/updating means (35) for cataloguing said information to be catalogued and said ID information received from said terminal (20, 60) in said data base by associating said information to be catalogued with said ID information.

9. A control system according to claim 6, 7 or 8 wherein said storage medium (10) comprises:
an electronic circuit chip (12) used for storing ID information in advance and mounted on a sheet (11); and
an antenna device (122) also mounted on said sheet (11) and used for generating a power by using an electric wave received thereby for reading out information from said electronic circuit chip (12) and transmitting said information.

10. A control system according to claim 6 wherein said terminal (20, 60) further comprises a display means (25) for displaying catalogued information acquired by said acquirement means (22, 23).

11. A control apparatus employed in a control system used for controlling ID information stored in a storage medium (10) and provided with a terminal (20, 60) capable of making an access to said storage medium, said control apparatus (30, 70) comprising:
a data base (31, 71) used for cataloguing ID information of said storage medium (10) read out by said terminal (20, 60) from said storage medium and transmitted to said control apparatus and information to be catalogued for said storage medium with said ID information associated with said information catalogued for said storage medium; and
a search means (35) for searching said data base (31, 71) for catalogued information associated with ID information received from said terminal (20, 60) and transmitting said catalogued information to said terminal.

12. A control apparatus according to claim 11 wherein:
said data base (31, 71) is also used for cataloguing attribute information in addition to ID information of said storage medium (10) read out by said terminal (20, 60) from said storage medium and transmitted to said control apparatus and information to be catalogued for said storage medium with said attribute information and said ID information associated with said information catalogued for said storage medium; and
the search means (35) searches said data base (31, 71) for ID information and catalogued information associated with attribute information received from said terminal (20, 60) and transmits said ID information and said catalogued information to said terminal.

13. A terminal employed in a control system also employing a control apparatus (70) for controlling ID information stored in storage mediums (10) and provided with capability of making an access to one of said storage mediums associated with said terminal, said terminal comprising:
a temporary data base (28) used for cataloguing some of pieces of ID information of said storage mediums (10) catalogued in a data base (71) of said control apparatus (70) and some of pieces of catalogued information also catalogued in said data base of said control apparatus for said storage mediums and associated with at least one of pieces of attribute information also catalogued in said data base;
a reading means (21) for reading out ID information and attribute information from said storage medium (10) associated with said terminal;
an acquirement means (26) for searching said data base (28) for one of said pieces of ID information and one of said pieces of catalogued information matching said attribute information read out by said reading means;
and a transmission/update means (22, 23) for transmitting said attribute information read out by said reading means to said control apparatus (70) to acquire ID information and catalogued information for said attribute information to be used for updating the contents of said temporary data base in case said acquiring means (26) does not find one of said pieces of ID information and one of said pieces of catalogued information matching said attribute information in said temporary data base.

14. A terminal system according to claim 13 wherein said terminal further comprises a display means (25) for displaying catalogued information acquired by said acquirement means (26).

15. A control apparatus according to claim 11 or 12, wherein said control apparatus further comprises a cataloguing/updating means (35) for cataloguing information to be catalogued and ID information received from said terminal (20, 60) in said data base (31, 71) by associating said catalogued information with said ID information.

16. A program storing medium for storing a program to be loaded for execution into a control apparatus (30, 70) for controlling ID information of a storage medium (10) stored in a storage medium (10) in conjunction with a terminal (20, 60) for reading out information from said storage medium in order for said terminal to catalogue information for said storage medium into said control apparatus wherein said program is executed so that:
in an operation to catalogue information to be catalogued for said storage medium (10) into said control apparatus (30, 70),
said terminal (20, 60) receives said information to be catalogued, reads out said ID information from said storage medium (10) and transmits said information to be catalogued and said ID information to said control apparatus (30, 70); and
said control apparatus (30, 70) catalogues said information to be catalogued and said ID information therein by associating said information to be catalogued with said ID information, whereas
in an operation to examine information already catalogued in said control apparatus (30, 70) for said storage medium (10),
said terminal (20, 60) reads out said ID information from said storage medium (10) and transmits said ID information to said control apparatus (30, 70);
said control apparatus (30, 70) transmits said information already catalogued therein and associated with said ID information to said terminal (20, 60); and
said terminal (20, 60) receives said already catalogued information from said control apparatus (30, 70).

17. A control system for controlling information catalogued for a storage medium (10) used for storing ID information, said control system comprising:
a control apparatus (30, 70) for controlling ID information of said storage medium (10); and
a terminal (20, 60) for reading out information from said storage medium (10), wherein:
said terminal comprises:
a reading means (21) for reading out ID information from said storage medium (10);
a transmission means (22, 23) for transmitting said ID information and information received by said terminal to be catalogued to said control apparatus (30, 70); and
an acquirement means (22, 23) for acquiring catalogued information associated with said ID information from said control apparatus (30), whereas
said control apparatus (30, 70) comprises:
a cataloguing means (35, 31, 71) for cataloguing said information to be catalogued and said ID information received from said terminal by associating said information with said ID information; and
a transmission means (32, 33) for transmitting said catalogued information to said terminal.

18. A control system according to claim 17 wherein:
said storage medium (10) has a means (125) for storing authentication information for authenticating said ID information along with said ID information in advance wherein said ID information can be authenticated by using a key owned by said control apparatus (30, 70); said terminal (20, 60) comprises:
a reading means (21) for reading out ID information and authentication information from said storage medium; and
a transmission means (22, 23) for transmitting said ID information and said authentication information along with information received by said terminal to be catalogued to said control apparatus (30, 70), and
said control apparatus (30, 70) comprises:
an authentication means (34) for authenticating said ID information on the basis of said authentication information by using said key;
a cataloguing means (35, 31, 71) for cataloguing said information to be catalogued and said ID information by associating said information with said ID information for a resuit of authentication indicating that said ID information is valid; and
a transmission means (32, 33) for transmitting said catalogued information associated with said ID information to said terminal for a result of authentication indicating that said ID information is valid.

19. A control system according to claim 17 or 18, wherein:
said storage medium (10) includes a means (125) for storing attribute information along with ID information in advance;
said control apparatus (30, 70) comprises a control means (35) for controlling pieces of ID information of a plurality of said storage mediums (10) and pieces of information catalogued for said storage mediums by associating said pieces of ID information and said pieces of catalogued information with pieces of attribute information stored in said storage mediums, and
said terminal (20, 60) comprises:
a terminal control means (26) for controlling some of said pieces of ID information and some of said pieces of catalogued information controlled by said control means employed in said control apparatus (30, 70) and associated with at least one of said pieces of attribute information;
a reading means (21) for reading out ID information and attribute information from one of said storage mediums (10) associated with said terminal (20, 60) in order to examine information catalogued for said storage medium;
an examination means (26) for determining whether or not said ID information read out from said storage medium (10) and associated with said attribute information also read out from said storage medium is one of said pieces of ID information controlled by said terminal control means (26) itself;
a transmission/update means (22, 23) for transmitting said attribute information read out by said reading means (21) to said control apparatus (30, 70) to acquire ID information and catalogued information for said attribute information to be used for updating said pieces of ID information and said pieces of catalogued information controlled by said terminal control means (26) in case said examination means (26) determines that said ID information read out from said storage medium (10) and associated with said attribute information also read out from said storage medium is not one of said pieces of ID information controlled by said terminal control means; and
an acquirement means (26) for searching said pieces of ID information controlled by said terminal control means (26) for a particular one matching with said ID information read out from said storage medium (10) and associated with said attribute information also read out from said storage medium and acquiring one of said pieces catalogued information controlled by said terminal control means and associated with said particular piece of ID information in case said examination means (26) determines that said ID information read out from said storage medium and associated with said attribute information also read out from said storage medium is one of said pieces of ID information controlled by said terminal control means.

20. A control system according to claim 17, 18 or 19, wherein:
said control apparatus (30, 70) further comprises a control means (35) for controlling ID information and attribute information of said storage medium (10) by associating said ID information and said attribute information with user ID information which can be set by the user of said storage medium;
said terminal further has:
a reading means (21) for reading out ID information from said storage medium (10);
a transmission means (22, 23) for transmitting said ID information and user ID information received by said terminal (20, 60) to said control apparatus (30, 70) in an operation to catalogue said user ID information for said storage medium (10); and
a transmission means (22, 23) for transmitting said ID information to said control apparatus (30, 70) in an operation to examine user ID information for said storage medium (10), and
said control apparatus (30, 70) comprises:
a cataloguing means (35, 31, 71) for cataloguing said user ID information by associating said user ID information with said ID information; and
a transmission means (32, 33) for transmitting catalogued user ID information associated with said ID information to said terminal (20, 60).
